# EUROPEAN PATENT SPECIFICATION

(11) **EP 1 936 474 B1**
(45) Date of publication and mention of the grant of the patent: **20.04.2011**
(21) Application number: 06026462.9
(22) Date of filing: 20.12.2006
(51) Int. Cl.: G06F 3/023, A01K 1/12, A01K 5/02, A01K 29/00, A01J 5/007

(54) **Improvements relating to the input of data into equipment for performing an animal related operation**
Verbesserungen bei der Dateneingabe in Einrichtungen zur Ausführung von Vorgängen im Zusammenhang mit Tieren
Améliorations de saisie de données pour dispositif de traitement de données permettant d'exécuter une opération concernant un animal

(43) Date of publication of application: 25.06.2008
(73) Proprietor: DeLaval Holding AB, 147 21 Tumba (SE)
(72) Inventor: Axelsson, Lars-Arne, 128 31 Skarpnäck (SE); Obermüller, Helmut, 112 25 Stockholm (SE)
(74) Representative: Hällgren, Christer

(56) References cited:
- EP-A- 0 364 112
- EP-A- 1 630 645
- WO-A-99/51083
- US-B1- 6 307 549

## Description

The present invention relates to equipment for performing an animal relating operation such as the milking and/or feeding of a cow. More particularly, the invention relates to a method and apparatus for manually inputting data relating to the animal into the equipment.

Animal husbandry is becoming more and more automated resulting in the need to have more sophisticated computer controlled equipment for carrying out functions such as milking or feeding. This in turn has resulted in each of the animals having to be individually identified and for the animal identification to be known to the equipment.

Additionally, control of the equipment needs to be simplified as far as a user is concerned so that its operation can be manually controlled in a simple fashion without requiring detailed knowledge of either the equipment or of computer controls. This has resulted in the provision of special input arrangements such as keypads and displays which are specifically tailored to the equipment concerned. While this has resulted in user-friendly equipment, there still remains the problem of identifying individual animals to the equipment.

WO 99/51083A discloses a method for testing of animals, being milked. A portable remote control device is provided to input data to milk meters, receive and store data from the milk meters and display at least selected data.

US-B1-6307549 relates to a reduced keyboard disambiguating system having a keyboard with a reduced number of keys. A plurality of letters and symbols are assigned to a set of data keys so that keystrokes entered by a user are ambiguous. A number of vocabulary modules are provided each containing a library of objects that are associated with a keystroke sequence. A selection list is displayed showing objects associated with a keystroke sequence that match the entered keystroke sequence.

From a first aspect, the present invention provides a method for performing an animal relating operation comprising storing animal identification indicia, performing an animal relating operation using a performing means, storing the order in which animals have been operated upon by the performing means, and identifying to the performing means the next animal to be attended to, characterised in that the identification indicia are numbers, each being unique to a respective animal, and in that the method further comprises interrogating the storage means and automatically selecting the next animal to be attended to on the basis of the order in which they were previously attended to, displaying the selected identification number, and manually confirming or amending the selected number.

From a second aspect, the present invention provides equipment for performing an animal relating operation comprising storage means for storing animal identification numbers, means for performing an animal relating operation and means for storing the order in which animals have been operated upon by the performing means, characterised in that there are means for interrogating the storage means and automatically selecting the next animal to be attended to on the basis of the order in which they were previously attended to, means for displaying the selected number and means for manually confirming or amending the select number.

On the entry of an initial piece of data, the equipment will suggest one or more possible animal identification numbers. As a further data input is made, the suggestions made by the equipment are refined.

In order that the present invention be more readily understood, an embodiment thereof will now be described by way of example with reference to the accompanying drawings in which:-
Fig. 1 shows a front view of a data input device according to the present invention;
Fig. 2 shows an example of a data table of the type utilised by the apparatus;
Fig. 3 shows a flow diagram for explaining the operation of the device shown in Fig. 1.

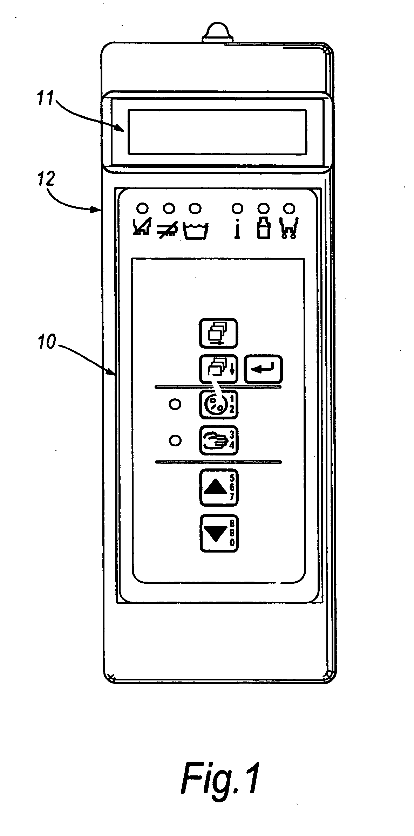

The preferred embodiment is described in relation to the equipment being for milking animals and which includes a milking unit which is computer controlled in order to achieve as much automatic operation as possible without manual intervention. It is assumed that a user or milker is in ultimate control of the equipment and that he has access to a data input and monitor device which provides him with information relating to the operation of the equipment. In this embodiment, it is assumed that the input device is in the form of a handheld unit but this is not necessarily the case. Additionally, it is assumed that the handheld unit is in wireless or infrared communication with a central computer which ultimately controls the apparatus. The preferred wireless link utilises Bluetooth technology.
Referring now to Fig. 1, this shows a manual input device according to the present invention where it will be seen that it comprises a keypad section 10 a display section 11 and an indicator section 12. This input device is arranged to provide individual control for each aspect of the overall apparatus. The controller is thus a universal controller and the mode in which it is operating is indicated by the indicator section 12 which has a number of icons representing the different modes of operation of the overall equipment the exact mode selected is indicated by the icon being illuminated or by an LED adjacent the icon being illuminated.

The keypad itself has a reduced number of keys in view of the fact that the equipment has predetermined operations available to it depending on the mode in which it is placed. In this case, one of the keys of the keypad allows the mode to be selected by using the up down keys shown or, within a particular mode different sub-menu program selections can be made again by utilising the up down keys. Additional keys are also provided for additional functions.

Additional information can be conveyed to the milker utilising the display section 11 which contains an alphanumeric display arrangement.

It will be noted that certain of the keys are additionally provided with groups of numerals. In this case, one key is indicated as being associated with the numerals 1 and 2 while another of the keys is indicated as being associated with the numerals 3 and 4. A further key is indicated as being associated with an increased number of numerals in this case 5, 6 and 7 while a final key is associated with the numerals 8, 9 and 0. Thus, all the numerals are entered using only four keys.

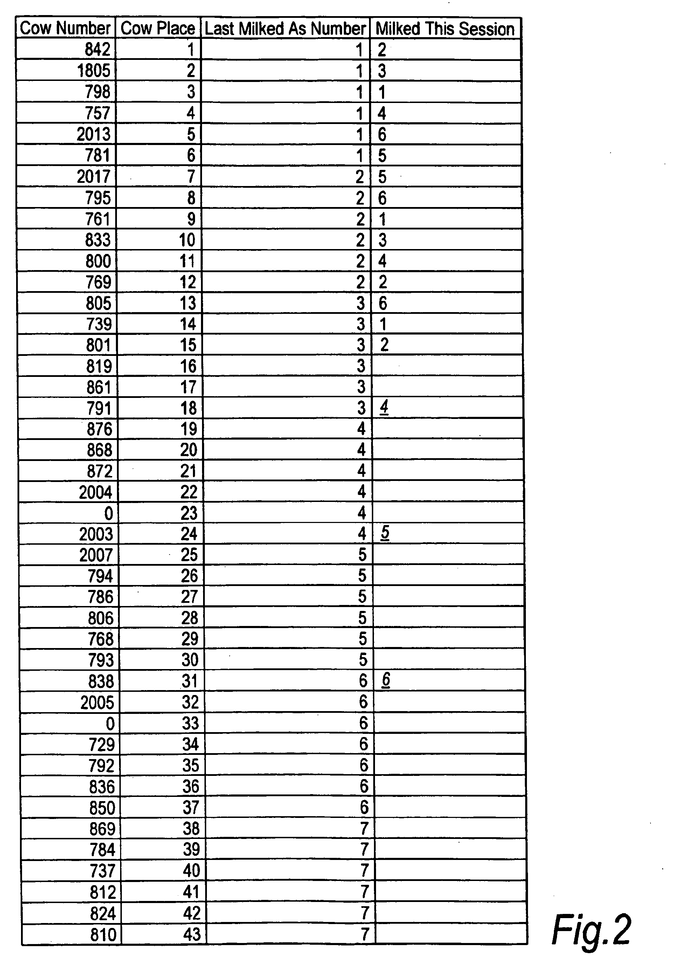

The equipment comprises a number of milking units. The number of units is dependent on the size of the herd and in this case it is assumed that there are six milking units in operation. The units maintain a shared table which identifies the cows by number and also a cow place mapping in the barn. This information, in combination with the order the cows have previously been milked is noted as this is not necessarily the order they stand in the barn. Such a table is shown in Fig. 2 where the first column indicates the individual cow number, the second column indicates the stall number in the barn occupied by that cow, the third column indicates the order the cows were milked in the immediately preceding milking session and the fourth and final column indicates the order in which the cows are being milked in this milking session. It will be seen that cow number 842 was the first cow milked in the previous session by one of the milking units and cow number 1805 was the first cow milked by another unit. Cow number 2017 was the second cow milked by one of the units and cow number 805 was the third cow milked by a unit etc. Since the table is shared by all the milking units, it is not necessary to store information relating to the milking unit used. All that is required is for the tables to indicate whether a cow was the first, second, third etc cow milked by a particular milking unit. This table is synchronised between the milking units primarily to update the milked this session column which starts the session with 0 and then is written with the milking unit number that has identified and milked the cow to enable other monitoring functions. With the most significant bit set in the milked this session column, the cow is identified but not milked. When the cow is milked the most significant bit is cleared, the last milked as number column is written with the number that this milking unit milked the cow e.g. the first, second, third cow and this milking unit is then used for milking the next available cow.

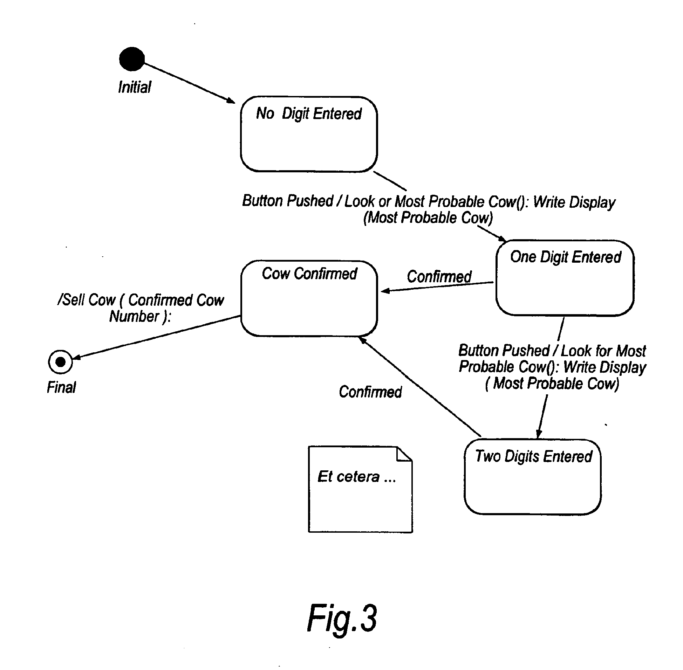

Referring now to Fig. 3, this shows a flow chart for explaining how a milker will utilise the keyboard device. Firstly, the milker will select the cow table mode of operation and then within the cow table select a submenu for the smart manual identification process. In this mode, the display screen 11 is blank if there is only one milking unit. It is possible that at this stage the apparatus may present a cow number on the display 11 based on cow place and last milked as number as an initial suggestion. If this number is correct the user can either confirm the selection or simply exit the submenu which is taken as equivalent to a confirmation. In the event that no number is presented by the apparatus on the display or if the presented number is incorrect, with the keyboard device still in the enter smart ID mode, the user pushes the button representing the most significant digit of the cow number. This then results in the milking unit searching the table for the cow of which the most significant digit is one of the possible cow identification numbers. The unit then presents that cow number for display. In case more than one cow number meets the conditions, the unit checks the cow place numbers of the possible cows again with reference to the table. If the cow places seem to be far apart the unit infers from this that there are two milkers operating in different areas of the barn. The unit then assumes that the cow number that represents a cow reasonably close to the last milked cow on this unit is the most likely suggestion. As a default position, in cases where the unit cannot make an intelligent guess on which cow is required, the unit displays the lowest number cow number. If the suggested cow number is not correct the user then pushes a button representing the next digit of the desired cow identification number. The unit then performs the same actions as before but narrows the search by combining the two button pushers representing the two most significant digits. Once more, if the suggested number is incorrect, the user presses a button representing the third digit of the cow number and this process continues until the suggested number is correct whereupon the user can confirm this selection or simply exit the mode.

In order that this operation be more clear and also in order to indicate the flexibility of the apparatus, the following examples set out how different cows will be identified utilising the data shown in Fig. 2 utilising the keypad as shown in Fig. 1.

### Example 1:

MU4 is about to milk cow 791
1. the user enters the enter cow menu
2. the MU has milked 2 cows before and looks through the list for a 'number 3' cow in the `last milked as number' column and suggests the cow number is 819 as it is the cow nearest the last milked cow of the unit as it has no other way to determine which of the possible cows 791, 819 or 861 it is
3. the user pushes the [567] button
4. the MU checks the list again and excludes the 819 and 861 alternatives and suggests 791
5. the user confirms
6. the MU synchronises the list with the system to exclude 791 for the next MU, 791 flagged as identified but no milked.

### Example 2:

MU 5 is about to milk cow 2003 that is a slow milker
1. the user enters the enter cow menu
2. the MU has milked 2 cows before and looks through the list for a 'number 3' cow and suggests that cow number 819 as it is the cow nearest the last milked cow of the unit as it has no other way to determine which of the possible cows, 819 or 861 it is
3. the user pushes the [12] button
4. the MU checks the list again and finds no unmilked 'number 3' cow starting with 1 or 2. There are two possible cows that are 'number 4' cows: 2003 and 2004 the MU suggest 2004 as it is the nearest
5. the user pushes the [890] button
6. this button fulfils both 2003 and 2004, the MU suggests 2003 as the user did not confirm 2004, (or still suggest 2004 as it fulfils the condition)
7. the user confirms
8. the MU synchronises the list with the system to exclude 2004 for the next MU, 2004 flagged as identified but not milked.

### Example 3:

MU 6 is about to milk cow 838
1. the user enters the enter cow menu
2. the MU has milked 2 cows before and looks through the list for a 'number 3' cow and suggests the cow number 819 as it is the nearest the last milked cow of the unit as it has no other way to determine which of the possible cows, 819 or 861 it is.
3. the user pushes the [890] button
4. The MU suggests 861 as the user did not confirm 819
5. the user pushes the [34] button
6. the MU finds no 'number 3 cow STARTING WITH [8 or 9] AND CONTINUING WITH [3 or 4]. There is no 'number 4' or 'number 5' cow either so the MU suggests 838 as it is the nearest cow of the 'number 6' cows that fulfil the conditions (836 and 838)
7. the user confirms
8. the MU synchronises the list with the system to exclude 838 for the next MU, 838 flagged as identified but not milked.

The above equipment can be implemented using either a centralised memory/processor which controls slave milking units or be implemented by intelligent milking units which control their own behaviour on the basis of the shared cow table.

Further, although the above embodiment is described on the basis of only a single depression of a key indicating simply the block of numerals associated with the respective key, it is possible to modify the operation so that repeated depression of the same key will cycle the generation of the numbers associated with the key.

## Claims

1. A method for performing an animal relating operation comprising storing animal identification indicia, performing an animal relating operation using a performing means, storing the order in which animals have been operated upon by the performing means, and identifying to the performing means the next animal to be attended to, **characterised in that** the identification indicia are numbers, each being unique to a respective animal, and **in that** the method further comprises interrogating the storage means and automatically selecting the next animal to be attended to on the basis of the order in which they were previously attended to, displaying the selected identification number, and manually confirming or amending the selected number.

2. A method according to claim 1 wherein a keypad (10) is used for the entry of identification numbers, where each key of the keypad relates to a plurality of numerals each representing one digit of the identification number.

3. A method according to claim 2 wherein a single operation of a key results in an animal identification number being displayed.

4. A method according to claim 3 wherein the first key depression is indicative of the first digit of the identification number and a second key depression is indicative of the second digit of the identification number.

5. A method according to any one of claims 1 to 4 wherein there are a plurality of performing means, and the storage means is a single unit available to all performing means.

6. A method according to claim 5 wherein the storage means is updated at the end of a session in order to group together animals in the order they are attended to by the individual performing means.

7. A method according to claim 6 wherein the automatic selection is carried out by each performing means offering to attend to the next animal in the group irrespective of whether or not it had previously attended to that animal in a previous session.

8. Equipment for performing an animal relating operation comprising storage means for storing animal identification numbers, means for performing an animal relating operation and means for storing the order in which animals have been operated upon by the performing means, **characterised in that** there are means for interrogating the storage means and automatically selecting the next animal to be attended to on the basis of the order in which they were previously attended to, means for displaying the selected number and means for manually confirming or amending the select number.

9. Equipment according to claim 8 wherein a keypad (10) is used for the entry of identification numbers where each key of the keypad relates to a plurality of numerals.

10. Equipment according to claim 9 wherein the integration means is responsive to a first key depression as indicative of the first digit of the identification number and is responsive to a second key depression as being indicative of the second digit of the identification number.

11. Equipment according to claim 8, 9 or 10, and comprising a plurality of performing means, the storage means being a single unit available to all performing means.

12. Equipment according to claim 11 wherein the storage means is arranged to be periodically updated in order to group together in a table animals in the order they are attended to by the individual performing means.

## Patentansprüche

1. Verfahren zur Ausführung eines Vorgangs im Zusammenhang mit Tieren, welches das Speichern Tieridentifikationszeichen, das Ausführen eines Vorgangs im Zusammenhang mit Tieren unter Verwendung eines Ausführungsmittels, das Speichern der Reihenfolge, in welcher die Tiere von dem Ausführungsmittel bearbeitet worden sind, und das Identifizieren des nächsten abzufertigenden Tiers für das Ausführungsmittel umfasst, **dadurch gekennzeichnet, dass** es sich bei den Identifikationszeichen um Nummern handelt, welche jeweils einzigartig einem entsprechenden Tier zugewiesen sind, und dass das Verfahren ferner das Abfragen des Speichermittels und das automatische Auswählen des nächsten abzufertigenden Tiers auf der Grundlage der Reihenfolge, in welcher diese zuvor abgefertigt wurden, das Anzeigen der ausgewählten Identifikationsnummer und das manuelle Bestätigen oder Ändern der ausgewählten Nummer umfasst.

2. Verfahren nach Anspruch 1, wobei für die Eingabe von Identifikationsnummern ein Tastenfeld (10) verwendet wird, wobei sich jede Taste des Tastenfeldes auf mehrere Ziffern bezieht, welche jeweils eine Stelle der Identifikationsnummer darstellen.

3. Verfahren nach Anspruch 2, wobei ein einzelnes Betätigen einer Taste dazu führt, dass eine Tieridentifikationsnummer angezeigt wird.

4. Verfahren nach Anspruch 3, wobei durch das erste Drücken einer Taste die erste Stelle der Identifikationsnummer angezeigt wird und durch das zweite Drücken einer Taste die zweite Stelle der Identifikationsnummer angezeigt wird.

5. Verfahren nach einem der Ansprüche 1 bis 4, wobei es mehrere Ausführungsmittel gibt und das Speichermittel eine einzige Einheit ist, die für alle Ausführungsmittel verfügbar ist.

6. Verfahren nach Anspruch 5, wobei das Speichermittel am Ende eines Durchgangs aktualisiert wird, um die Tiere in der Reihenfolge, in der sie durch die einzelnen Ausführungsmittel abgefertigt werden, zusammen zu gruppieren.

7. Verfahren nach Anspruch 6, wobei die automatische Auswahl von jedem Ausführungsmittel vorgenommen wird, welches anbietet, das nächste Tier in der Gruppe abzufertigen, ungeachtet dessen, ob es dieses Tier zuvor in einem vorigen Durchgang abgefertigt hatte oder nicht.

8. Einrichtung zur Ausführung eines Vorgangs im Zusammenhang mit Tieren, welche ein Speichermittel zum Speichern von Tieridentifikationsnummern, ein Mittel zum Ausführen eines Vorgangs im Zusammenhang mit Tieren und ein Mittel zum Speichern der Reihenfolge umfasst, in welcher die Tiere von dem Ausführungsmittel bearbeitet worden sind, **dadurch gekennzeichnet, dass** es ein Mittel zum Abfragen des Speichermittels und automatischen Auswählen des nächsten abzufertigenden Tiers auf der Grundlage der Reihenfolge, in welcher diese zuvor abgefertigt wurden, ein Mittel zum Anzeigen der ausgewählten Identifikationsnummer und ein Mittel zum manuellen Bestätigen oder Ändern der ausgewählten Nummer gibt.

9. Einrichtung nach Anspruch 8, wobei ein Tastenfeld (10) für die Eingabe von Identifikationsnummern verwendet wird, wobei sich jede Taste des Tastenfeldes auf mehrere Ziffern bezieht.

10. Einrichtung nach Anspruch 9, wobei das Integrationsmittel auf das Drücken einer ersten Taste als Anzeige der ersten Stelle der Identifikationsnummer reagiert und auf das Drücken einer zweiten Taste als Anzeige der zweiten Stelle der Identifikationsnummer reagiert.

11. Einrichtung nach Anspruch 8, 9 oder 10, welche ferner mehrere Ausführungsmittel umfasst, wobei das Speichermittel eine einzige Einheit ist, die für alle Ausführungsmittel verfügbar ist.

12. Einrichtung nach Anspruch 11, wobei das Speichermittel dafür eingerichtet ist, periodisch aktualisiert zu werden, um die Tiere in der Reihenfolge, in der sie durch die einzelnen Ausführungsmittel abgefertigt werden, in einer Tabelle zusammen zu gruppieren.

## Revendications

1. Procédé d'exécution d'un opération concernant un animal, comprenant les étapes consistant à stocker des index d'identification des animaux, exécuter une opération concernant un animal en utilisant un moyen d'exécution, stocker l'ordre dans lequel les animaux ont été traités à l'aide du moyen d'exécution, et associer au moyen d'exécution l'animal à traiter suivant, **caractérisé en ce que** les index d'identification sont des numéros dont chacun est unique pour un animal donné et **en ce que** le procédé comprend en plus les étapes consistant à interroger le moyen de stockage et sélectionner automatiquement l'animal à traiter suivant en fonction de l'ordre dans lequel les animaux ont été traités précédemment, afficher le numéro d'identification sélectionné, et confirmer ou modifier manuellement le numéro sélectionné.

2. Procédé selon la revendication 1, dans lequel un clavier (10) est utilisé pour saisir les numéros d'identification, chaque touche du clavier correspondant à une pluralité de numéraux dont chacun représente un chiffre du numéro d'identification.

3. Procédé selon la revendication 2, dans lequel la simple activation d'une touche provoque l'affichage du numéro d'identification d'un animal.

4. Procédé selon la revendication 3, dans lequel le premier appui sur une touche indique le premier chiffre du numéro d'identification et un deuxième appui sur une touche indique le deuxième chiffre du numéro d'identification.

5. Procédé selon l'une quelconque des revendications 1 à 4, dans lequel il est prévu une pluralité de moyens d'exécution et le moyen de stockage est un module unique accessible à tous les moyens d'exécution.

6. Procédé selon la revendication 5, dans lequel le moyen de stockage est actualisé à la fin d'une session afin de regrouper les animaux dans l'ordre dans lequel ils sont traités par les moyens d'exécution individuels.

7. Procédé selon la revendication 6, dans lequel la sélection automatique est effectuée par chaque moyen d'exécution proposant de traiter l'animal suivant dans le groupe, que ce moyen ait ou non traité cet animal auparavant dans une session antérieure.

8. Équipement permettant d'exécuter une opération concernant un animal, comprenant un moyen de stockage pour stocker les numéros d'identification des animaux, un moyen d'exécution d'une opération concernant un animal et un moyen de stockage de l'ordre dans lequel les animaux ont été traités par le moyen d'exécution, **caractérisé en ce qu'**il est prévu un moyen permettant d'interroger le moyen de stockage et de sélectionner automatiquement l'animal à traiter suivant en fonction de l'ordre dans lequel les animaux ont été traités précédemment, un moyen pour afficher le numéro, et un moyen pour confirmer ou modifier manuellement le numéro sélectionné.

9. Équipement selon la revendication 8, dans lequel un clavier (10) est utilisé pour saisir les numéros d'identification, chaque touche du clavier correspondant à une pluralité de numéraux.

10. Équipement selon la revendication 9, dans lequel le moyen de saisie réagit à un premier appui sur une touche correspondant au premier chiffre du numéro d'identification et à un deuxième appui sur une touche correspondant au deuxième chiffre du numéro d'identification.

11. Équipement selon les revendications 8, 9 ou 10, comprenant une pluralité de moyens d'exécution et dans lequel le moyen de stockage est un module unique accessible à tous les moyens d'exécution.

12. Équipement selon la revendication 11, dans lequel le moyen de stockage est agencé de façon à être actualisé périodiquement afin de regrouper les animaux dans une table dans l'ordre dans lequel ils sont traités par les moyens d'exécution individuels.
